(19) **Europäisches Patentamt**

**European Patent Office**

**Office européen des brevets**

(11) **EP 1 170 675 A1**

(12) **EUROPEAN PATENT APPLICATION**

(43) Date of publication:
**09.01.2002 Bulletin 2002/02**

(51) Int Cl.7: **G06F 17/30**

(21) Application number: **00305696.7**

(22) Date of filing: **06.07.2000**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI**<br><br>(71) Applicant: **Gavoa Ltd**<br>**London W140QH (GB)** | (72) Inventor: **The designation of the inventor has not yet been filed**<br><br>(74) Representative: **Geary, Stuart Lloyd et al**<br>**Venner, Shipley & Co., 20 Little Britain**<br>**London EC1A 7DH (GB)** |

(54) **Presentation of customised data content**

(57)     An image file format comprises a plurality of images (13, 14, 15, 16) and rules (12) for selecting an image for display so that it is appropriate for the display device of a user agent (2). The file may also include rules for selecting images on other grounds and for modifying selected images. The selection of images may be performed at an origin server (2), a gateway (4) or a user agent (2).

EP 1 170 675 A1

## Description

The present invention relates to the presentation of content customised for a device presenting the content.

The WAE (Wireless Application Environment) has recently been implemented in European GSM (Global System for Mobile communication) networks, bringing World Wide Web-like functionality to mobile phones and other portable devices, generally known as WAP (Wireless Application Protocol) devices. However, WAP devices have varying screen sizes and aspect ratios ranging from a single text line to 640 x 480 pixels and beyond. Similarly, the "colour" depth may vary from 1-bit upwards. Of course, the "colour" depth may be represented by a WAP device as a grey scale.

The designer of a WML (Wireless Markup Language) deck of cards has the problem of either avoiding the use of images or trying to include images that will be rendered in a desirable manner on the greatest number of WAP devices. The present invention addresses this problem.

According to the present invention, there is provided a method of displaying an image, the method comprising the steps of:

obtaining a requested content definition entity, containing image data defining a plurality of images and control data for controlling the selection of an image, defined by said image data, for display in dependence on a characteristic of a device which is to display the selected image; and
extracting image data defining one of said images from the content definition entity in dependence on a characteristic of the device which is to display the selected image and said control data.

The format of the data used for generating the displayed image need not be the same as that used in the content definition entity. For instance, the content definition entity may employ the GIF format and the selected image be converted into bitmap (BMP) format before being displayed.

The extraction of the image data may be performed by a user agent, a gateway or an origin server.

Where the image is extracted before being sent to the user agent, the image data may be sent to the user agent in a further content definition entity. Such a further content definition entity may comprises further control data for defining processing of the extracted image in dependence on circumstance data. This processing may comprise combining the extracted image data with other data, which may be the circumstance data itself or data selected in dependence on the circumstance data, in dependence on said further control data. The circumstance data may comprise personal data stored in the device which is to display the extracted image or environmental data relating to a user agent supported by the device which is to display the extracted image or the identity of the mobile network being used from the transmission of the image data to the device which is to display it.

In the WAP environment, the image is preferably in wbmp format.

Said characteristic is preferably a client type id, e.g. code or a name, identifying the user device or user agent requesting the content definition entity in order to obtain an image therefrom.

According to the present invention, there is also provided a technical manifestation of a content definition entity for use in a method according to present invention, said entity including data defining a plurality of images and control data for controlling the selection of an image, defined by said image data, for display in dependence on a characteristic of a device which is to display the selected image.

The entity may comprise further control data for controlling the selection of images and/or modification of selected images.

The manifestation may comprise a magnetic field pattern, features on an optically readable data carrier, an array of electronic memory cells, a signal, which may be a packetised signal, modulated with a digital representation of the contents of said entity.

According to the present invention, there is further provided an apparatus for use in displaying an image, the apparatus comprising:

means storing a content definition entity, containing image data defining a plurality of images and control data for controlling the selection of an image, defined by said image data, for display in dependence on a characteristic of a device which is to display the selected image; and
processing means for extracting image data defining one of said images from the content definition entity in dependence on a characteristic of the device which is to display the selected image and said control data.

The apparatus may consist of a wireless communications terminal device, a gateway apparatus for providing a gateway between a user agent and an origin server or an origin server.

The processing means may be configured for processing the image data defining said one of said images in dependence on further control data in the received content definition entity and circumstance data.

The processing means may be configured such that said processing of the image data defining said one of said images comprises combining the extracted image data with other data in dependence on said further control data.

A gateway or origin server according to the present invention, may be combined with a wireless communications terminal including further processing means to produce a composite apparatus according to the present invention, wherein the further processing means is configured for processing the image data defining said one of said images in dependence on further control data in the received content definition entity and circumstance data. The further processing means may be configured such that said processing of the image data defining said one of said images comprises combining the extracted image data with other data, e.g. circumstance data, in dependence on said further control data. The circumstance data may comprise personal data stored in the device which is to display the extracted image or environmental data relating to a user agent supported by the device which is to display the extracted image or the mobile network being used.

A gateway or an origin server according to the present invention preferably includes transmission means for sending the extracted image data to the device which is to display it, wherein the extracted image data is sent to the device which is to display the image as a wbmp file.

Embodiments of the present invention will now be described, by way of example, with reference to the accompanying drawings, in which: -

Figure 1 shows the main nodes involved in a WAE session;
Figure 2 shows an image displayed on three differently shaped displays;
Figure 3 shows an image displayed on three differently shaped displays;
Figure 4 shows an image displayed on three differently shaped displays;
Figure 5 shows an images displayed on three differently shaped displays according to the present invention;
Figure 6 illustrates a first content definition entity file format according to the present invention;
Figure 7 illustrates the origin server of Figure 1;
Figure 8 illustrates a first WAE session;
Figure 9 is a flowchart illustrating the operation of an origin server;
Figure 10 illustrates a second WAE session;
Figure 11 is a flowchart illustrating the operation of a WAE gateway;
Figure 12 illustrates a third WAE session;
Figure 13 is a flowchart illustrating the operation of a WAE user agent;
Figure 14 illustrates a second content definition entity file format according to the present invention;
Figure 15 illustrates a fourth WAE session;
Figure 16 is a flowchart illustrating the operation of an origin server;
Figure 17 illustrates a third content definition entity file format according to the present invention;
Figure 18 is a flowchart illustrating the operation of a WAE user agent;
Figure 19 illustrates a fifth WAE session;

Figure 20 is a flowchart illustrating the operation of a WAE gateway;
Figure 21 illustrates a fourth content definition entity file format according to the present invention;
Figure 22 illustrates a sixth WAE session; and
Figure 23 is a flowchart illustrating the operation of a WAE user agent.

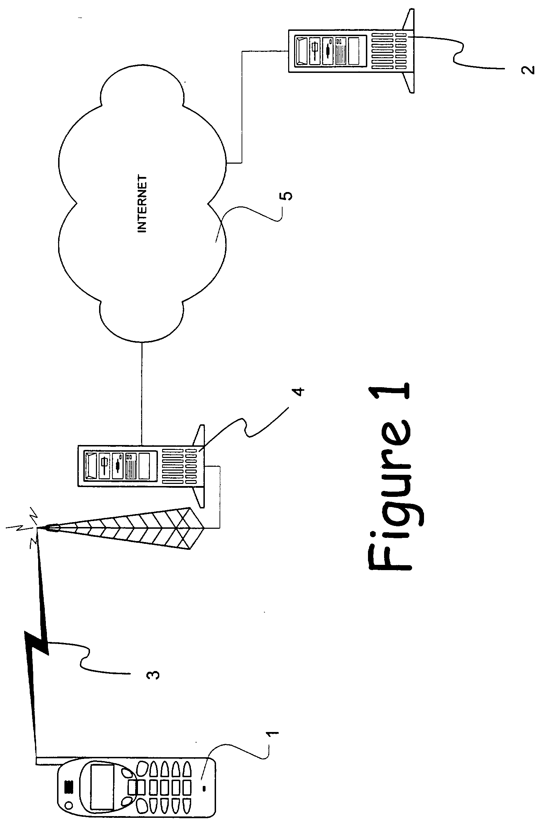

Referring to Figure 1, a WAP enabled terminal 1 can communicate with an origin server 2, in order to retrieve WML card decks, via a wireless link 3, a WAP gateway 4 and the Internet 5. The mobile phone 1, the origin server 2 and the WAP gateway 4 are conventional except for the novel features described below. The WML card decks may be served in that form by the origin server 2 or produced by the gateway 4 from HTML documents served by the origin server 2.

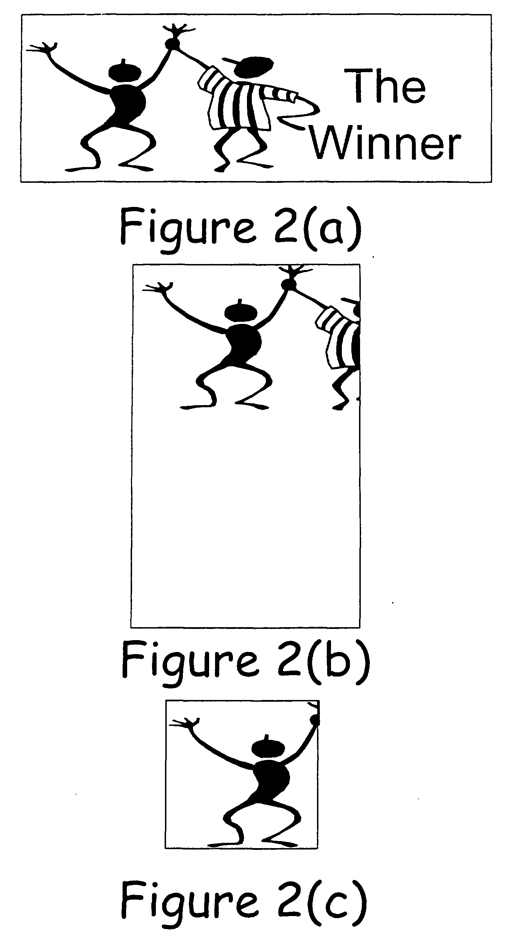

Referring to Figures 2(a), 2(b) and 2(c), an image appropriate for a landscape display (Figure 2(a)) is likely to be cropped if an attempt is made to display it on a portrait display (Figure 2(b)) or a very small display (Figure 2(c)). The text in the images shown is part of a graphical image rather than being rendered from character codes.

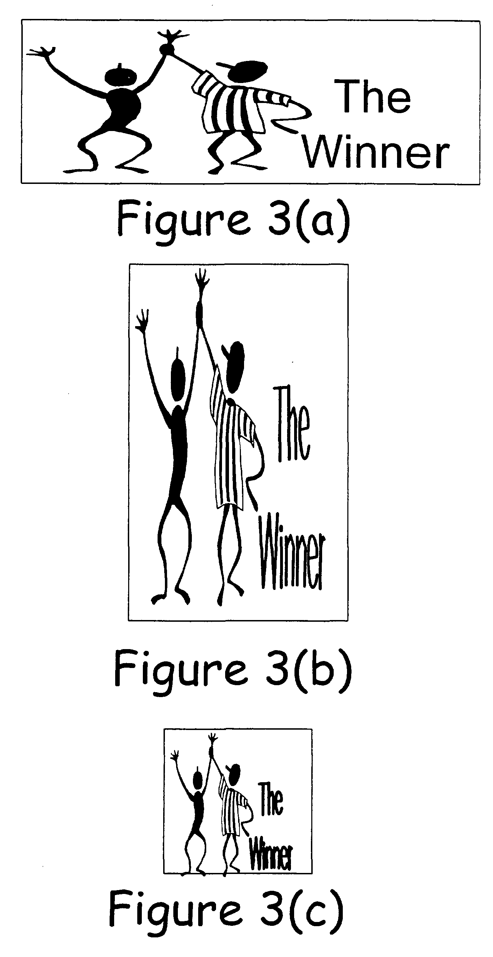

Referring to Figures 3(a), 3(b) and 3(c), the problem of image cropping can be ameliorated to some degree by adjusting the size and aspect ratio of the image. However, this often distorts the image undesirably and can render any text in the image unreadable.

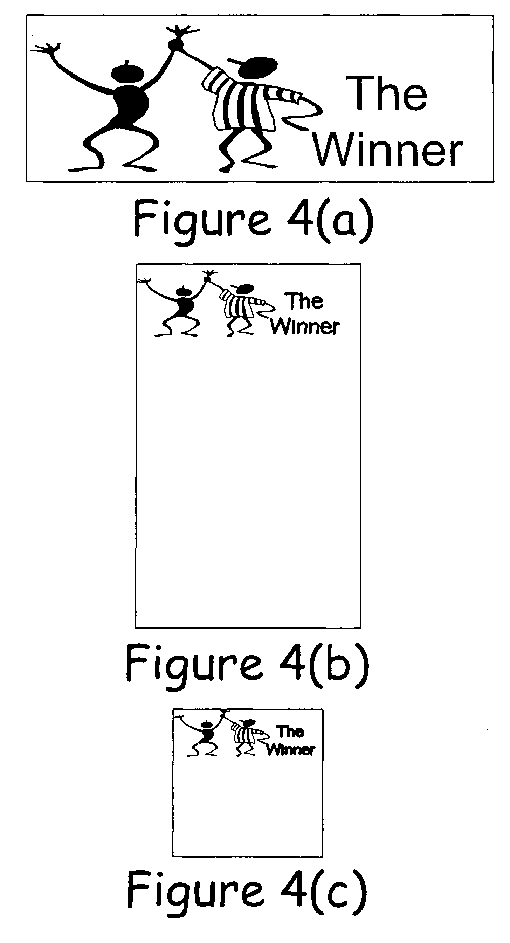

Referring to Figures 4(a), 4(b) and 4(c), the problem of image cropping can be ameliorated to some degree by maximising the width or height of the image while maintaining its aspect ratio. However, this often results in the image being too small to see clearly.

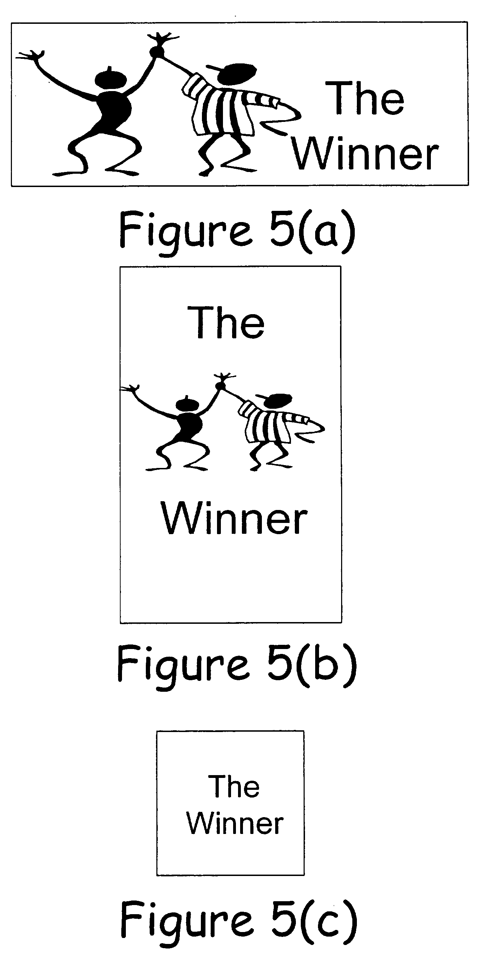

Referring to Figures 5(a), 5(b) and 5(c), the present invention solves this problem by providing for selection of different images in dependence on the display resources available.

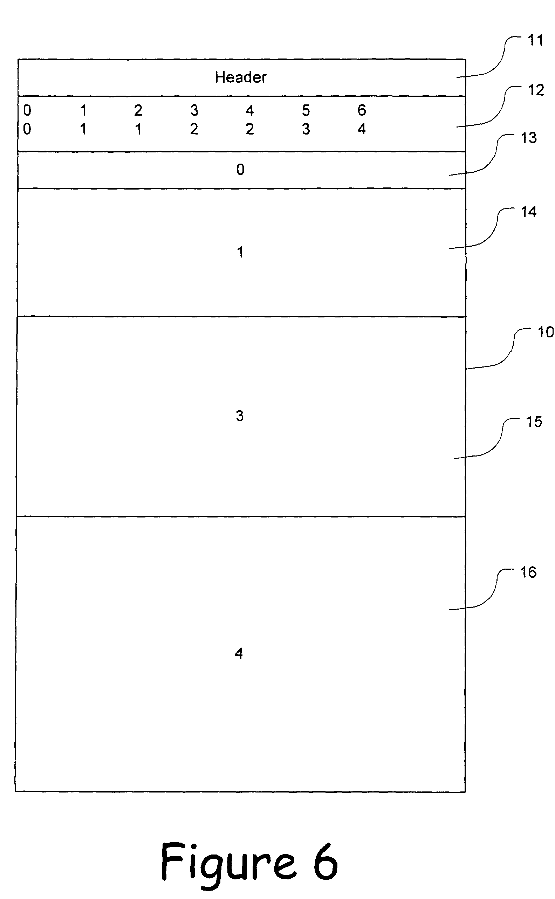

Referring to Figure 6, an example of a content entity file 10 according to the present invention comprises a header 11, a display-to-image mapping table 12 and first, second, third and fourth image data blocks 13, 14, 15, 16. In the present example, each image data block 13, 14, 15, 16 comprises a different "wbmp" format file. The display-to-image mapping table 12 can be used to select in image in dependence on the display resources available at the terminal 1 where it is to be displayed. The image will generally be intended to be embedded in a WML card and will often not be intended to use the whole of the display. Consequently, the WML author can cause an image to be selected within the context of the author's overall card design, e.g. to fit with planned text flow, not just the size of the display.

The selection of the appropriate image can be performed at the terminal 1, the gateway 4 or the origin server 2.

A first embodiment in which image selection is performed at the origin server 2 will now be described.

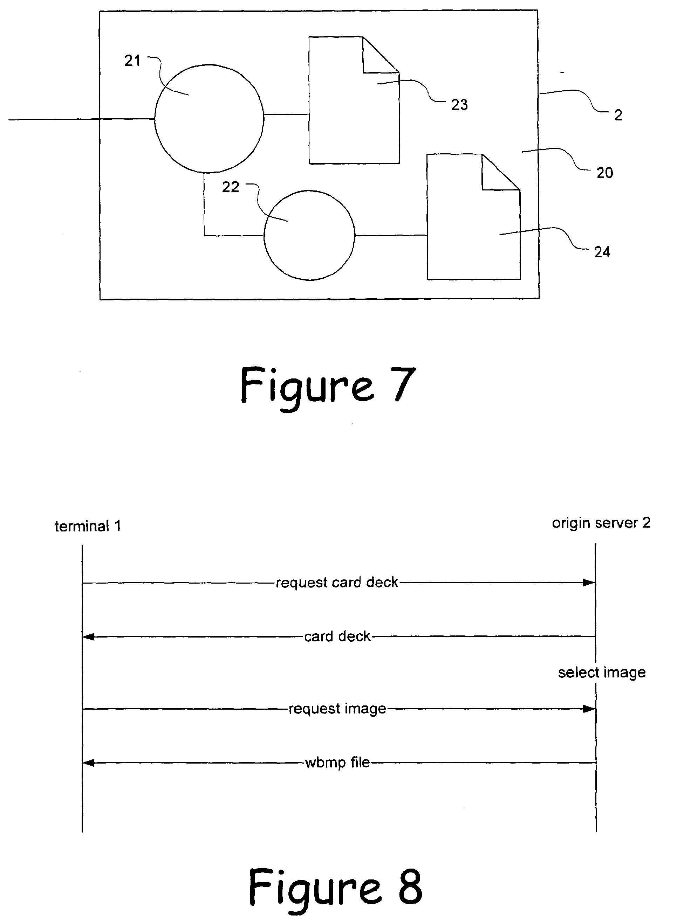

Referring to Figure 7, the origin server 2 comprises a computer 20 supporting a WAE server process 21 and a CGI (Common Gateway Interface) program 22. The WAE server process 21 can serve content, in the form of WML cards 23, directly or as the output of the CGI program 22. The CGI program 22 can read content entity files 24 and has access to user agent profiles stored on remote web servers and maintained by user agent manufacturers. The user agent profiles include display type codes for use in indexing the display-to-image mapping tables 12 of content entity files 24.

A simple WAE session will now be described with reference to Figure 8.

When the terminal 1 requests a deck of cards from the origin server 2, it sends a request including the URL of the cards via the gateway 4 and the Internet 5. When the origin server 2 receives the request, it is routed to the WAE server process 21. The WAE server process 21 then sends the requested cards 23 to the terminal 1 in the conventional manner.

One of the cards includes a WML tag marking the position of an image and including the URL of the CGI program 22. This causes the terminal 1 to send a request to the origin server 2 identifying the CGI program 22. When this request is received by the origin server 20, it is passed to the WAE server process 21 which then runs the CGI program 22 passing to it the WAE request header data received from the terminal 1. This data includes the URL of the relevant user agent profile which is contained in an "accept" header of the form:-

Accept: image/ccf;uaprof=http://www.vendor. com/device where "device" identifies the user agent type.

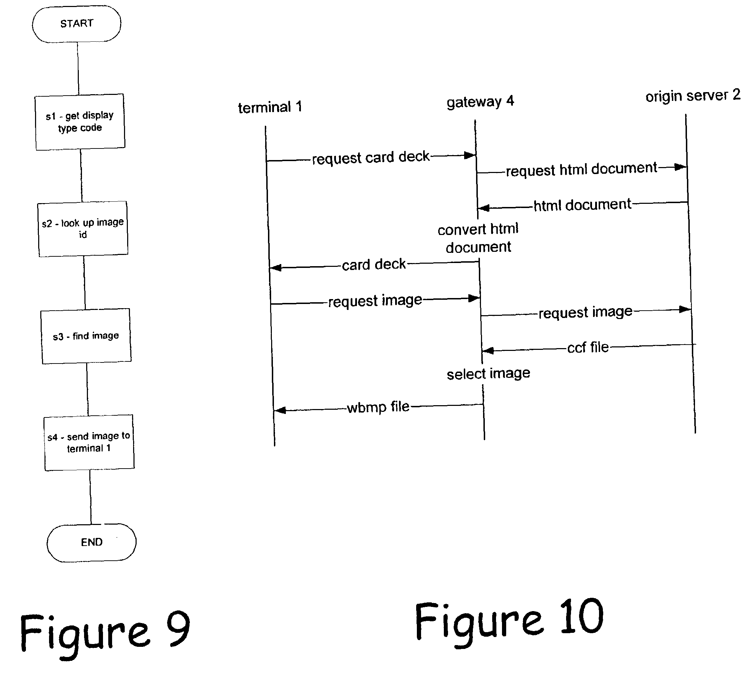

Referring to Figure 9, the CGI program 22 gets the relevant display type code from the profile whose URL was in the accept header (step s1). When the display type code has been obtained, the CGI program 22 reads the display-to-image mapping table 12 of the content entity file and gets the id of the associated image (step s2). The CGI program 21 then locates the start of the image whose id was obtained (step s3) and then prints "content-type: image/vnd.wap.wbmp" followed by the identified image byte-by-byte (step s4) which sends it to the terminal 1.

When the terminal 1 receives the image file, it displays the image in the place specified in the WML of the card containing the image.

It can be seen that the selection of an image for display by the terminal 1 is carried out in dependence on the type of the terminal and hence the display size and shape available.

The function of the CGI program 21 may alternatively be performed within the web server's own process space. For instance, a special "module" could be used in an Apache web server.

A second embodiment in which images selection is performed by the gateway 4 will now be described.

In the present example, the gateway 4 is largely conventional and the origin server 2 is a conventional web server. The gateway 4 differs from conventional WAE gateways in its response to content having a "image/ccf" header.

Referring to Figure 10, in this scenario, when the terminal 1 submits a URL at the origin server 2, it does so using WSP (Wireless Session Protocol) to communicate with the gateway 4 which translates the WSP from the terminal 1 into http for communication with the origin server 2. Additionally, the gateway 4 performs content conversion, converting HTML documents into WML cards.

Considering now the case where the terminal has requested an image of type "image/ccf", the gateway 4 requests the specified resource from the origin server 2 which serves it in the conventional manner. The "image/ccf" content comprises a file as shown in Figure 6.

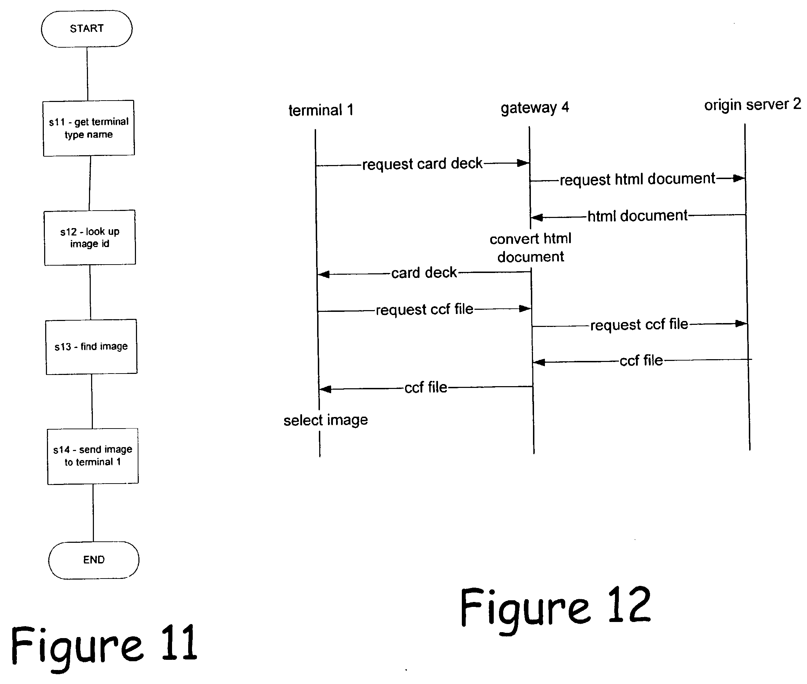

Referring to Figure 11, on receiving the "image/ccf" content from the origin server 2, the gateway 4 gets the display type code the terminal 1 (step s11), using the user agent profile URL which it will have cached from the terminal's original request. When the display type code has been obtained, the display-to-image mapping table 12 of the received file is read to get the id of the appropriate image (step s12). The gateway 4 then locates the start of the image whose id was obtained (step s13) and then sends "content-type: image/vnd.wap.wbmp" followed by the identified image (step s14) to the terminal 1.

When the terminal 1 receives the image file, it displays the image in the place specified in the WML of the card containing the image.

A third embodiment in which image selection is performed by the terminal 1 will now be described.

In the present example, the gateway 4 is conventional and the origin server 2 is an conventional web server or WAE server. The terminal 1 differs from a conventional terminal in that its WML browser includes code for processing files as shown in Figure 6 to select an image for display. In the present example, such files are identified by a "image/ccf" header.

Referring to Figure 12, in this scenario, when the terminal 1 submits a URL at the origin server 2, it does so using WSP (Wireless Session Protocol) to communicate with the gateway 4 which translates the WSP from the terminal 1 into http, if necessary, for communication with the origin server 2.

Considering now the case where the terminal has requested an image of type "image/ccf" in response to a WML tag, the gateway 4 requests the specified resource from the origin server 2 which serves it in the conventional manner. The returned file is then sent on to the terminal 1.

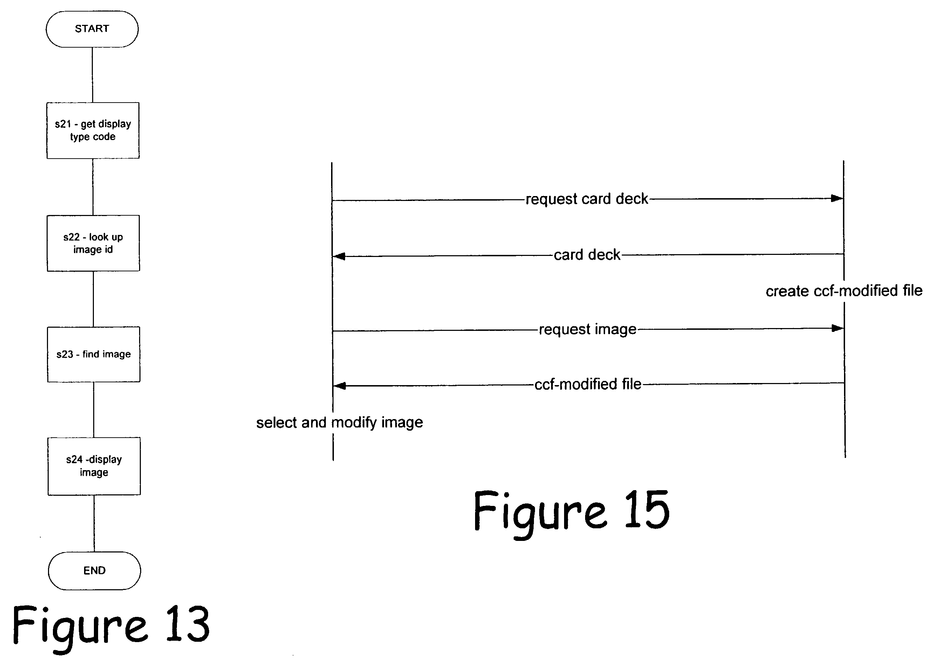

Referring to Figure 13, on receiving the "image/ccf" content from the origin server 2, the browser of the terminal 1 gets a locally stored display type code (step s21). This code will conveniently be programmed into the terminal 1 during manufacture. When the display type code has been obtained, the display-to-image mapping table 12 of the received file is read to get the id of the appropriate image (step s22). The browser then locates the start of the image whose id was obtained (step s23) and renders the image on the terminal's display in the place specified by the WML card in which the image is embedded.

In the foregoing, images have been selected according to the device on which they are to be displayed. However, in addition to rules for selecting images according to display type, an image file may also include rules for selecting or modifying images according to other parameters.

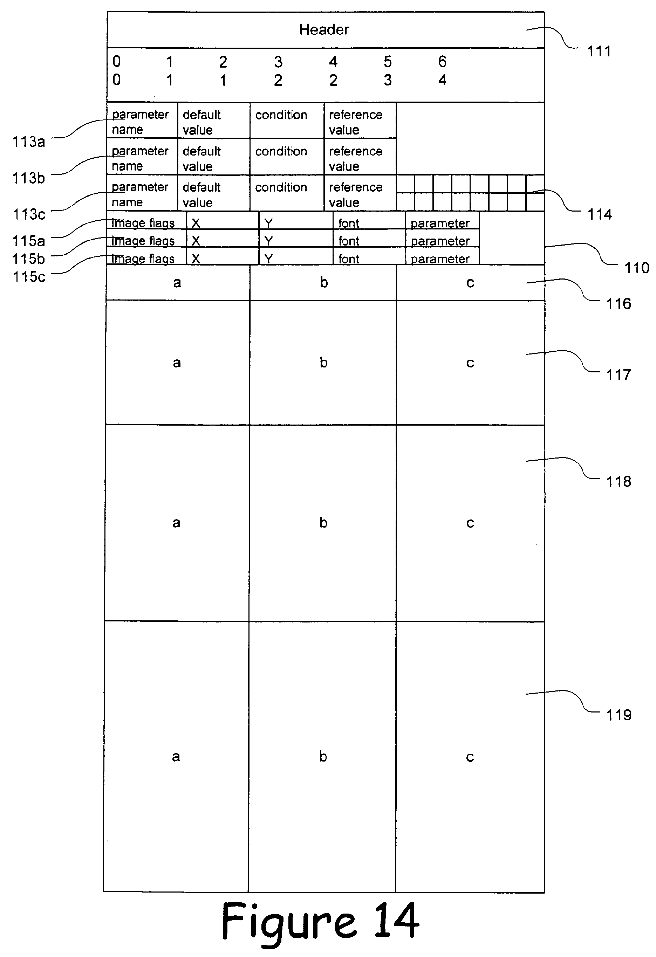

Referring to Figure 14, another example of a content entity file 110 according to the present invention comprises a header 111, a display-to-image mapping table 112, image selection rule definitions 113a, 113b, 113c, an image selection table 114, image modification definitions 115a, 115b, 115c and first, second, third and fourth image data blocks 116, 117, 118, 119. In this example, each image block 116, 117, 118, 119 comprises data for respective first, second and third images 116a, 117a, 118a, 119a, 116b, 117b, 118b, 119b, 116c, 117c, 118c, 119c. However, the image blocks 116, 117, 118, 119 may comprise different numbers of images from each other. In the present example, the image data is in the form of "wbmp" format files.

The display-to-image mapping table 112 can be used to select an image in dependence on the display resources available at the terminal 1 where it is to be displayed. The image selection rule definitions 113a, 113b, 113c and the image selection table 114 can be used to select images according to data stored in the terminal 1 itself or on the SIM card of a WAP-enabled GSM phone, e.g. user name, network, telephone number.

The image selection rule definitions 113a, 113b, 113c each comprise a parameter name entry, a parameter default value, a condition (e.g. no comparison, "=", " > ", "<" etc.) and a reference value. The image selection table 114 maps the results of the comparisons defined by the other subsections onto the images available for display in each image block 116, 117, 118, 119. For instance, if comparisons involving four parameters are used for selecting the image from those in each image block 116, 117, 118, 119, the results of the comparisons are represented by a four bit binary number, 0000, 0001, 0010 etc. The image selection table 114 then comprises an intra-block image ID, which need not be unique, for each four bit number, thus: -

| Comparison Result | Image ID |
|---|---|
| 0000 | 2 |

(continued)

| Comparison Result | Image ID |
|---|---|
| 0001 | 0 |
| ... | ... |
| 1111 | 1 |

The image modification definitions 115a, 115b, 115c enable the selected image to be modified by the inclusion of text. Each image modification definition 115a, 115b, 115c comprises a set of flags indicating the images to which it applies, X and Y coordinates specifying the position of text to be added, a font definition, including font name, colour, size, whether bold, italic or underlined, and a parameter name identifying the text to be inserted.

A fourth embodiment in which image selection is performed at the origin server 2 and by the terminal 1 will now be described.

Referring again to Figure 7, the origin server 2 is as described in connection with the first embodiment, save that the content entity file 24 has the form described above with reference to Figure 11.

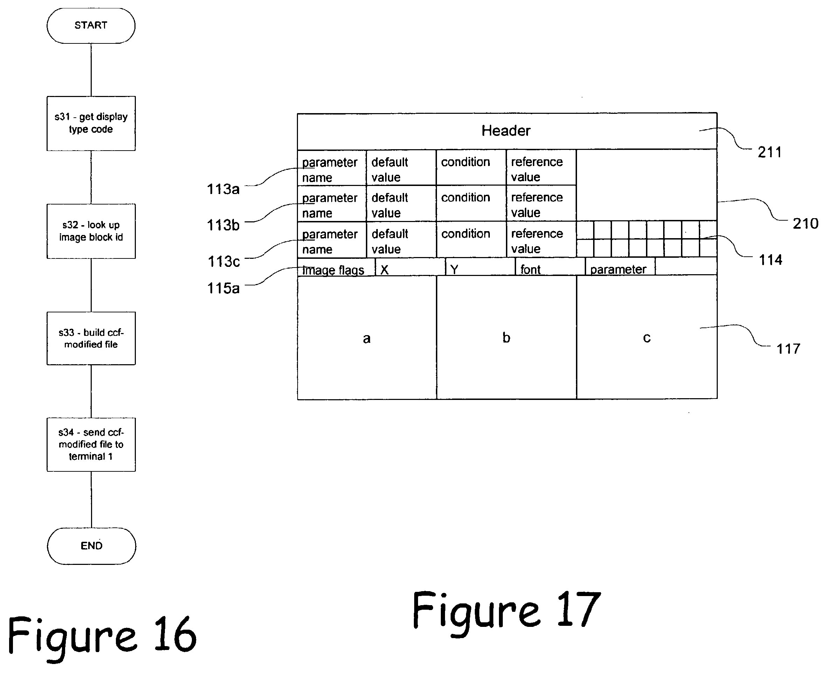

Another simple WAE session will now be described with reference to Figure 15.

When the terminal 1 requests a deck of cards from the origin server 2, it sends a request including the URL of the cards via the gateway 4 and the Internet 5. When the origin server 2 receives the request, it is routed to the WAE server process 21. The WAE server process 21 then sends the requested cards 23 to the terminal 1 in the conventional manner.

One of the cards includes a WML tag marking the position of an image and including the URL of the CGI program 22. This causes the terminal 1 to send a request to the origin server 2 identifying the CGI program 22. When this request is received by the origin server 20, it is passed to the WAE server process 21 which then runs the CGI program 22 passing to it the user agent profile URL received from the terminal 1.

Referring to Figure 16, the CGI program 22 gets the display type code from the user agent profile (step s31). When the display type code has been obtained, the CGI program 22 reads the display-to-image mapping table 12 of the content entity file and gets the id of the associated image block 116, 117, 118, 119 (step s32). The CGI program 21 then builds a new file (step s33) as shown in Figure 17. Referring now to Figure 17 also, when generating the new file the CGI program 22 generates a header 220 and adds to this the image selection rules 113a, 113b, 113c, the image table 114 and the image modification definition or definitions 115a that apply to the image block 117 whose id was obtained. The CGI program 22 then appends the image block 117 whose id was obtained. The new file is then sent to the terminal 1 preceded by a header containing "content-type: image/ccf-modified".

When the terminal 1 receives the image file, its browser identifies it by the content type header field.

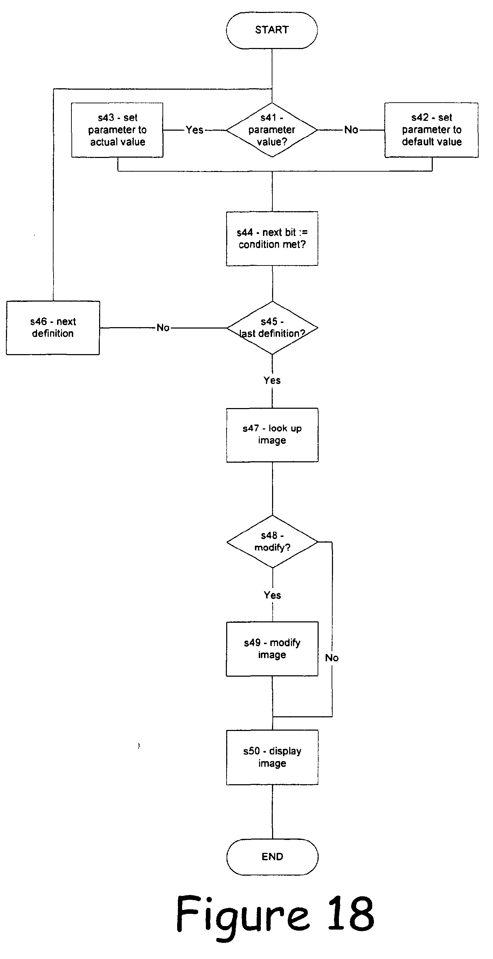

Referring to Figure 18, for each image selection rule 113a, 113b, 113c (steps s45 and s46), the terminal's browser determines whether a value is available for the current parameter (step s41) and, if not, sets the parameter's value to the default value (step s42). If, on the other hand, a value is available, the parameter's value is set to this value (step s43). Then, the browser determines whether the value of the parameter meets the specified condition and stores the result as a digit of n-bit binary number for indexing the image table 114 (step s44).

The parameters may comprise user details, such as name, age and sex, stored locally, the type of browser or operating system being used, the mobile network being used and environmental factors such as the current time or date. Thus, for example, a image selection control parameter entry could comprise:

age:25:>:30

and the browser would process it as follows. First the browser would try to read the user's age from a local store of personal information (steps s41) and, if it could not, would set the value of the age parameter to 25, the default value (step s42).

However, if an age value is found, the browser sets the parameter value to this (step s43). When the parameter value has been set, the browser determines which comparison type to employ, in this case "is greater than", and performs the appropriate comparison between the parameter value and the reference value, i.e. 30 (step s44). If the result of the comparison is false, a 0 is added in the next unfilled column of the n-bit binary number for indexing the image table 114. Similarly, If the result of the comparison is true, a 1 is added in the next unfilled column of the n-bit binary number for indexing the image table 114.

When the n-bit binary number has been completed, the browser looks up the image to be used in the image table 114 (step s47). This image is them modified in accordance with the image modification definition 115a.

The browser determines whether the selected image is to be modified, by looking at the image flags in the image modification definition 115a (step s48). If the selected image is to be modified, the browser inserts as text the value of the specified parameter at the position indicated by the co-ordinates, using the specified font, into the selected image (step s49). The image, modified or unmodified as the case may be, is then displayed by the terminal 1 (step s50).

A fifth embodiment in which image selection is performed at the gateway 4 and by the terminal 1 will now be described.

In the present example, the gateway 4 is largely conventional and the origin server 2 is an conventional web server. The gateway 4 differs from conventional WAE gateways in its response to content having a "image/ccf" header.

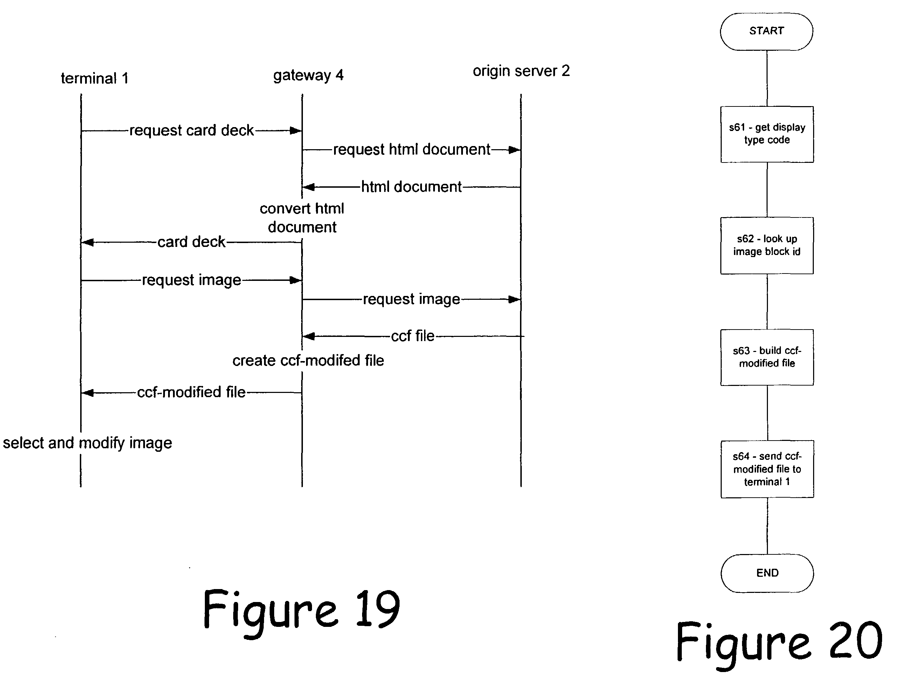

Referring to Figure 19, in this scenario, when the terminal 1 submits a URL at the origin server 2, it does so using WSP (Wireless Session Protocol) to communicate with the gateway 4 which translates the WSP from the terminal 1 into http for communication with the origin server 2. Additionally, the gateway 4 performs content conversion, converting HTML documents into WML cards.

Considering now the case where the terminal has requested an image of type "image/ccf", the gateway requests the specified resource from the origin server 2 which serves it in the conventional manner. The "image/ccf" content comprises a file as shown in Figure 14.

Referring to Figure 20, when the gateway 4 received an "image/ccf" content file, its gets the destination terminal's profile URL, which it will have cached, and uses it to get the destination terminal's display type code (step s61). When the display type code has been obtained, the gateway 4 reads the display-to-image mapping table 12 of the content entity file and gets the id of the associated image block 116, 117, 118, 119 (step s62). The gateway 4 then builds a new file (step s63) as shown in Figure 17. Referring now to Figure 17 also, when generating the new file the gateway 4 generates a header 120 and adds to this the image selection rules 113a, 113b, 113c, the image table 114 and the image modification definitions that apply to the image block 116, 117, 118, 119 whose id was obtained. The gateway 4 then appends the image block 116, 117, 118, 119 whose id was obtained. The new file is then sent to the terminal 1 preceded by a header containing "content-type: image/ccf-modified" (step s64).

When the terminal 1 receives the image file, its browser identifies it by the content type header field and processes it as in the fourth embodiment described above.

A sixth embodiment in which image selection is performed solely by the terminal 1 will now be described.

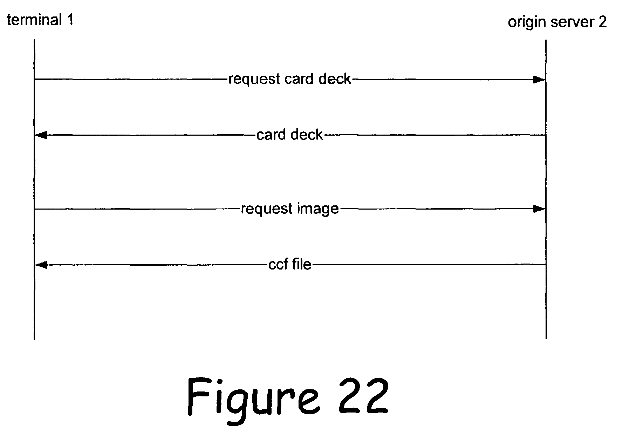

In the present example, the gateway 4 is conventional and the origin server 2 is an conventional web server or WAE server. The terminal 1 differs from a conventional terminal in that its WML browser includes code for processing files as shown in Figure 22 to select an image for display. In the present example, such files are identified by a "image/ccf" header.

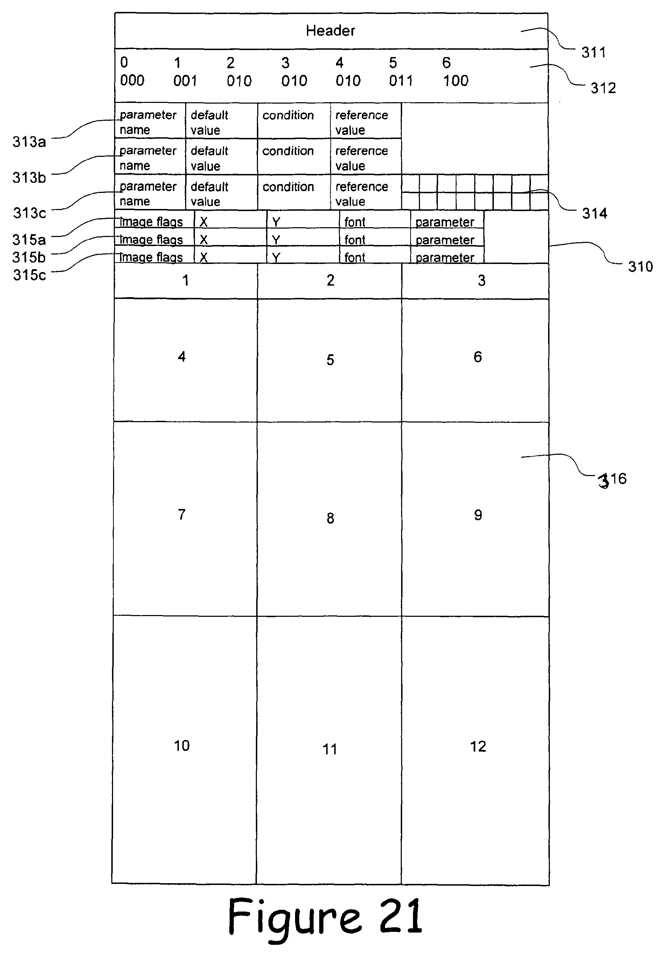

Referring to Figure 21, the content definition entity file 310 in this example comprises a header 311, a display-to-image mapping table 312, image selection rule definitions 313a, 313b, 313c, an image selection table 314, image modification definitions 315a, 315b, 315c and twelve images 316 in the form of "wbmp" format files.

Referring to Figure 22, in this scenario, when the terminal 1 submits a URL at the origin server 2, it does so using WSP (Wireless Session Protocol) to communicate with the gateway 4 which translates the WSP from the terminal 1 into http, if necessary, for communication with the origin server 2.

Considering now the case where the terminal has requested an image of type "image/ccf" in response to a WML tag, the gateway 4 requests the specified resource from the origin server 2 which serves it in the conventional manner. The returned file is then sent on to the terminal 1.

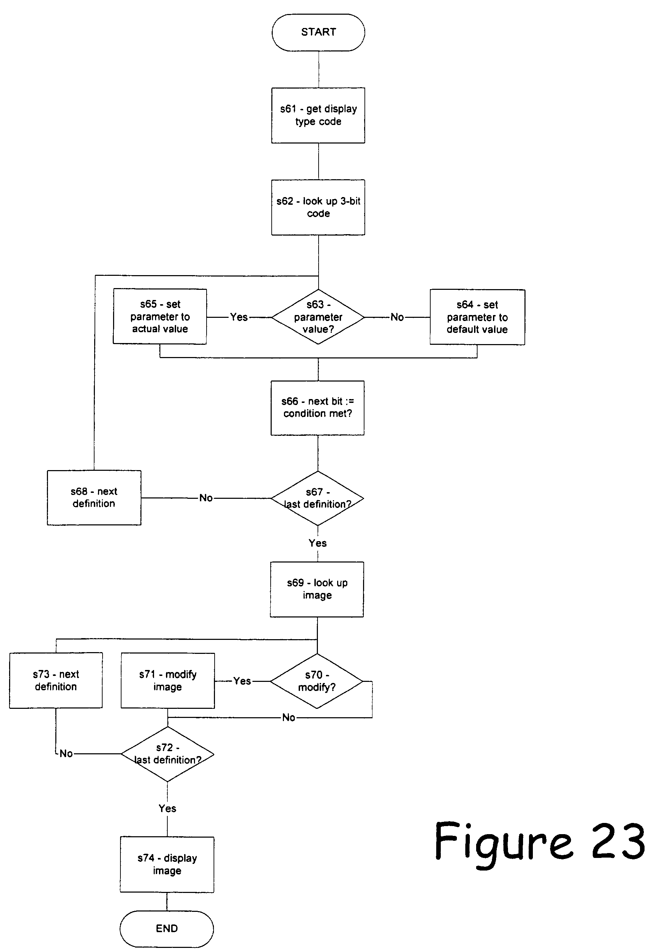

Referring to Figure 23, on receiving the "image/ccf" content from the origin server 2, the browser of the terminal 1 gets a locally stored display type code (step s61). This code will conveniently be programmed into the terminal 1 during manufacture. When the display type code has been obtained, the display-to-image mapping table 12 of the received file is read to get further code (step 62). This code is a three bit binary number and forms the first three bits of an n-bit binary number for indexing the image selection table 114. Then, for each image selection rule 113a, 113b, 113c (steps s67 and s68), the browser determines whether a value is available for the current parameter (step s63) and, if not, sets the parameter's value to the default value (step s64). If, on the other hand, a value is available, the parameter's value is set to this value (step s65). Then, the browser determines whether the value of the parameter meets the specified condition (step s66) and stores the result as a digit of the n-bit binary number for indexing the image table 114.

The parameters may comprise user details, such as name, age and sex, stored locally, the type of browser or operating system being used, the mobile network being used and environmental factors such as the current time or date. Thus, for example, a image selection control parameter entry could comprise:

age:25:>:30

and the browser would process it as follows. First the browser would try to read the user's age from a local store of personal information (steps s63) and, if it could not, would set the value of the age parameter to 25, the default value (step s64). However, if an age value is found, the browser sets the parameter value to this (step s65). When the parameter value has been set, the browser determines which comparison type to employ, in this case "is greater than", and performs the appropriate comparison between the parameter value and the reference value, i.e. 30 (step s66). If the result of the comparison is false, a 0 is added in the next unfilled column of the n-bit binary number for indexing the image table 114. Similarly, If the result of the comparison is true, a 1 is added in the next unfilled column of the n-bit binary number for indexing the image table 114.

When the n-bit binary number has been completed, the browser looks up the image to be used in the image table 114 to select one of the images in the file (step s69). This image is them modified in accordance with the image modification definitions 115a, 115b, 115c in the received file.

The browser determines whether and how the selected image is to be modified, by looking at the image flags in the image modification definitions 115a, 115b, 115c (step s70). For each modification definition 115a, 115b, 115c to be applied (steps s72 and s73), the browser inserts as text the value of the specified parameter at the position indicated by the co-ordinates, using the specified font, into the selected image (step s71). The image, modified or unmodified as the case may be, is then displayed by the terminal 1.

It will be appreciated that many modifications can be made to the embodiments described above. For instance other graphic file formats, e.g. PNG, JPEG, GIF, could be used. Furthermore, one or more of the images could be replace with audio data so that a sound can be used in place of an image on devices having simple text only displays. For instance, a image comprising a trade mark could be replaced by a corresponding jingle. The terminal apparatus would generally know how to treat an incoming file from the content type header that precedes it.

In the foregoing embodiments in which the content file is processed at the user agent, the content file processing functionality is embedded in the browser. However, this functionality could be provided by "plugins", an approach familiar in web browsers, or by some other software such as a part of the user agent's operating system, stored in ROM. The "plug-in" or other software could be stored in a SIM card, in the case of a WAP-enabled mobile phone, and loaded into RAM for execution as necessary.

**Claims**

1. A method of displaying an image, the method comprising the steps of:

   obtaining a requested content definition entity, containing image data defining a plurality of images and control data for controlling the selection of an image, defined by said image data, for display in dependence on a characteristic of a device which is to display the selected image; and
   extracting image data defining one of said images from the content definition entity in dependence on a characteristic of the device which is to display the selected image and said control data.

**2.** A method according to claim 1, including requesting said content definition using a user agent to obtain said content definition entity and extracting the image data defining said one of said images using the user agent.

**3.** A method according to claim 1, including requesting said content definition using a gateway to obtain said content definition entity and extracting the image data defining said one of said images using said gateway.

**4.** A method according to claim 1, including extracting the image data defining said one of said images at an origin server.

**5.** A method according to claim 3 or 4, wherein the extracted image data is sent to a user agent in a further content definition entity.

**6.** A method according to claim 2 or 5, including processing the image data defining said one of said images in dependence on further control data in the received content definition entity and circumstance data.

**7.** A method according to claim 6, wherein said processing is performed by a user agent and displaying the image defined by the processed image data using the device supporting said user agent.

**8.** A method according to claim 6 or 7, wherein said processing comprises combining the extracted image data with other data in dependence on said further control data.

**9.** A method according to claim 8, wherein said other data is an item of circumstance data.

**10.** A method according to any one of claims 6 to 9, wherein the circumstance data comprises personal data stored in the device which is to display the extracted image.

**11.** A method according to any one of claims 6 to 10, wherein the circumstance data comprises environmental data relating to a user agent supported by the device which is to display the extracted image.

**12.** A method according to claim 2 or 3, wherein the extracted image data is sent to the device which is to display the image as a wbmp file.

**13.** A method according to claim 1, wherein said characteristic is a client type id identifying the user device or user agent requesting the content definition entity in order to obtain an image therefrom.

**14.** A technical manifestation of a content definition entity for use in a method according to any one of claims 1 to 13, said entity including data defining a plurality of images and control data for controlling the selection of an image, defined by said image data, for display in dependence on a characteristic of a device which is to display the selected image.

**15.** A technical manifestation according to claim 14, comprising a magnetic field pattern.

**16.** A technical manifestation according to claim 14, comprising features on an optically readable data carrier.

**17.** A technical manifestation according to claim 14, comprising an array of electronic memory cells.

**18.** A technical manifestation according to claim 14, comprising a signal modulated with a digital representation of the contents of said entity.

**19.** A technical manifestation according to claim 14, wherein said signal comprises a plurality of packets.

**20.** An apparatus for use in displaying an image, the apparatus comprising:

means storing a content definition entity, containing image data defining a plurality of images and control data for controlling the selection of an image, defined by said image data, for display in dependence on a characteristic of a device which is to display the selected image; and processing means for extracting image data defining one of said images from the content definition entity in dependence on a characteristic of the device which is to display the selected image and said control data.

**21.** An apparatus according to claim 20, consisting of a wireless communications terminal device.

**22.** An apparatus according to claim 20, consisting of a gateway apparatus for providing a gateway between a user agent and an origin server.

**23.** An apparatus according to claim 20, consisting of an origin server.

**24.** An apparatus according to claim 22 or 23, wherein the extracted image data is sent to a user agent in a further content definition entity.

**25.** An apparatus according to claim 21 or 24, wherein the processing means is configured for processing the image data defining said one of said images in dependence on further control data in the received content definition entity and circumstance data.

26. An apparatus according to claim 25, wherein the processing means is configured such that said processing of the image data defining said one of said images comprises combining the extracted image data with other data in dependence on said further control data.

27. An apparatus according to claim 24, further comprising a wireless communications terminal including further processing means, wherein the further processing means is configured for processing the image data defining said one of said images in dependence on further control data in the received content definition entity and circumstance data.

28. An apparatus according to claim 27, wherein the further processing means is configured such that said processing of the image data defining said one of said images comprises combining the extracted image data with other data in dependence on said further control data.

29. An apparatus according to claim 26 or 28, wherein said other data is an item of circumstance data.

30. An apparatus according to any one of claims 25 to 29, wherein the circumstance data comprises personal data stored in the device which is to display the extracted image.

31. An apparatus according to any one of claims 25 to 29, wherein the circumstance data comprises environmental data relating to a user agent supported by the device which is to display the extracted image.

32. An apparatus according to claim 21 or 22, including transmission means for sending the extracted image data to the device which is to display it, wherein the extracted image data is sent to the device which is to display the image as a wbmp file.

33. An apparatus according to any one of claims 20 to 32, wherein said characteristic is a client type id identifying the user device or user agent requesting the content definition entity in order to obtain an image therefrom.

Figure 1

EP 1 170 675 A1

Figure 2(a)

Figure 2(b)

Figure 2(c)

Figure 3(a)

Figure 3(b)

Figure 3(c)

Figure 4(a)

Figure 4(b)

Figure 4(c)

Figure 5(a)

Figure 5(b)

Figure 5(c)

| Header | | | | | | |
|---|---|---|---|---|---|---|
| 0 0 | 1 1 | 2 1 | 3 2 | 4 2 | 5 3 | 6 4 |

11

12

13

| 0 |
|---|

| 1 |
|---|

14

| 3 |
|---|

10

15

| 4 |
|---|

16

Figure 6

## Figure 7

terminal 1                                                          origin server 2

request card deck

card deck

select image

request image

wbmp file

## Figure 8

EP 1 170 675 A1

## Figure 9

START

s1 - get display type code

s2 - look up image id

s3 - find image

s4 - send image to terminal 1

END

## Figure 10

terminal 1  gateway 4  origin server 2

—request card deck—→

—request html document—→

←—html document—

convert html document

←—card deck—

—request image—→

—request image—→

←—ccf file—

select image

←—wbmp file—

Figure 9

Figure 10

EP 1 170 675 A1

START

s11 - get terminal
type name

s12 - look up
image id

s13 - find image

s14 - send image
to terminal 1

END

# Figure 11

terminal 1          gateway 4          origin server 2

——request card deck——▶

——request html document——▶

◀——html document——

convert html
document

◀——card deck——

——request ccf file——▶

——request ccf file——▶

◀——ccf file——

◀——ccf file——

select image

# Figure 12

Figure 13

Figure 15

| Header | | | | | | |
|---|---|---|---|---|---|---|
| 0 0 | 1 1 | 2 1 | 3 2 | 4 2 | 5 3 | 6 4 |

| parameter name | default value | condition | reference value | |
|---|---|---|---|---|
| parameter name | default value | condition | reference value | |
| parameter name | default value | condition | reference value | |
| Image flags | X | Y | font | parameter |
| Image flags | X | Y | font | parameter |
| Image flags | X | Y | font | parameter |

| a | b | c |
|---|---|---|
| a | b | c |
| a | b | c |
| a | b | c |

113a
113b
113c
115a
115b
115c

111
114
110
116
117
118
119

## Figure 14

## Figure 16

```
    START
      |
s31 - get display
   type code
      |
s32 - look up
image block id
      |
s33 - build ccf-
 modified file
      |
s34 - send ccf-
modified file to
   terminal 1
      |
     END
```

## Figure 17

| Header | | | | | — 211 |
|---|---|---|---|---|---|
| parameter name | default value | condition | reference value | | |
| parameter name | default value | condition | reference value | | — 210 |
| parameter name | default value | condition | reference value | (grid) | — 114 |
| image flags | X | Y | font | parameter | |
| a | | b | | c | — 117 |

113a
113b
113c
115a

START

s43 - set parameter to actual value ——Yes—— s41 - parameter value? ——No—— s42 - set parameter to default value

s44 - next bit := condition met?

s46 - next definition ——No—— s45 - last definition?

Yes

s47 - look up image

s48 - modify?

Yes

s49 - modify image

No

s50 - display image

END

# Figure 18

terminal 1                    gateway 4                    origin server 2

——request card deck——▶
                              ——request html document——▶

                              ◀——html document——

                              convert html
                              document

◀——card deck——

——request image——▶
                              ——request image——▶

                              ◀——ccf file——

                              create ccf-modifed file

◀——ccf-modified file——

select and modify image

# Figure 19

EP 1 170 675 A1

START

s61 - get display
type code

s62 - look up
image block id

s63 - build ccf-
modified file

s64 - send ccf-
modified file to
terminal 1

END

# Figure 20

| Header | | | | | | 311 |
|---|---|---|---|---|---|---|

| 0 | 1 | 2 | 3 | 4 | 5 | 6 |
|---|---|---|---|---|---|---|
| 000 | 001 | 010 | 010 | 010 | 011 | 100 |

312

| parameter name | default value | condition | reference value | | |
|---|---|---|---|---|---|
| parameter name | default value | condition | reference value | | |
| parameter name | default value | condition | reference value | | |
| image flags | X | Y | font | parameter | |
| image flags | X | Y | font | parameter | |
| image flags | X | Y | font | parameter | |

313a  313b  313c

315a  315b  315c

314

310

| 1 | 2 | 3 |
|---|---|---|
| 4 | 5 | 6 |
| 7 | 8 | 9 |
| 10 | 11 | 12 |

316

# Figure 21

terminal 1                                                            origin server 2

──────────────────request card deck──────────────────▶

◀──────────────────card deck──────────────────

──────────────────request image──────────────────▶

◀──────────────────ccf file──────────────────

# Figure 22

START

s61 - get display type code

s62 - look up 3-bit code

s65 - set parameter to actual value ─Yes─ s63 - parameter value? ─No─ s64 - set parameter to default value

s66 - next bit := condition met?

s68 - next definition ─No─ s67 - last definition?

Yes

s69 - look up image

s73 - next definition    s71 - modify image ─Yes─ s70 - modify?

─No─

─No─ s72 - last definition?

Yes

s74 - display image

END

# Figure 23

**European Patent Office**

## EUROPEAN SEARCH REPORT

Application Number

EP 00 30 5696

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 6 006 231 A (POPA SORIN) 21 December 1999 (1999-12-21) <br><br> * column 1, line 33 – line 59 * <br> * column 2, line 16 – line 26 * <br> * column 3, line 7 – line 9 * <br> * column 3, line 62 – line 15; figures 1-3 * | 1,4-7, 14,20, 23-25 | G06F17/30 |
| X | EP 0 992 922 A (IBM) 12 April 2000 (2000-04-12) | 1,4-9, 11,14, 20, 23-29,31 | |
| Y | * page 7, line 25 – line 34 * <br><br> * page 6, line 57 – page 7, line 2; figures 1,11 * | 10,13, 30,33 | |
| Y | WO 98 32076 A (KONINKL PHILIPS ELECTRONICS NV ;PHILIPS NORDEN AB (SE)) 23 July 1998 (1998-07-23) <br> * page 1, line 27 – page 2, line 2 * <br> * page 6, line 22 – line 30 * <br> * page 9, line 29 – page 10, line 1 * | 10,13, 30,33 | **TECHNICAL FIELDS SEARCHED (Int.Cl.7)** <br><br> G06F |
| X | US 5 848 415 A (GUCK RANDAL LEE) 8 December 1998 (1998-12-08) <br> * column 1, line 64 – column 2, line 5 * <br> * column 6, line 34 – line 51 * <br> * column 7, line 17 – line 32 * | 1,4,20, 23 | |

The present search report has been drawn up for all claims

| Place of search | Date of completion of the search | Examiner |
|---|---|---|
| BERLIN | 30 November 2000 | Leouffre, M |

EPO FORM 1503 03.82 (P04C01)

EP 1 170 675 A1

**ANNEX TO THE EUROPEAN SEARCH REPORT
ON EUROPEAN PATENT APPLICATION NO.**

EP 00 30 5696

This annex lists the patent family members relating to the patent documents cited in the above-mentioned European search report.
The members are as contained in the European Patent Office EDP file on
The European Patent Office is in no way liable for these particulars which are merely given for the purpose of information.

30-11-2000

| Patent document cited in search report | | Publication date | Patent family member(s) | | Publication date |
|---|---|---|---|---|---|
| US 6006231 | A | 21-12-1999 | NONE | | |
| EP 0992922 | A | 12-04-2000 | JP 2000222332 A | | 11-08-2000 |
| WO 9832076 | A | 23-07-1998 | US 6076166 A | | 13-06-2000 |
| | | | EP 0898748 A | | 03-03-1999 |
| US 5848415 | A | 08-12-1998 | NONE | | |

EPO FORM P0459

For more details about this annex : see Official Journal of the European Patent Office, No. 12/82

28